# EUROPÄISCHE PATENTSCHRIFT

(11) **EP 2 774 787 B1**
(45) Veröffentlichungstag und Bekanntmachung des Hinweises auf die Patenterteilung: **11.10.2017**
(21) Anmeldenummer: 14154868.5
(22) Anmeldetag: 12.02.2014
(51) Int. Cl.: B60H 1/00

(54) **Klimaanlage für ein Fahrzeug sowie Verfahren zum Klimatisieren eines Fahrzeugs**
Air-conditioning system for a vehicle and method for air-conditioning a vehicle
Climatisation de véhicule et procédé de climatisation d'un véhicule

(30) Priorität: 04.03.2013 DE 102013003507
(43) Veröffentlichungstag der Anmeldung: 10.09.2014
(73) Patentinhaber: Volkswagen Aktiengesellschaft, 38440 Wolfsburg (DE)
(72) Erfinder: Naubert, Ingo, 38477 Jembke (DE); Hackl, Thomas, 38442 Wolfsburg (DE); Kolb, Martin, 30655 Hannover (DE)

(56) Entgegenhaltungen:
- EP-A1- 2 345 550
- WO-A1-2012/028307
- US-A1- 2012 011 869

## Beschreibung

Die Erfindung betrifft eine Klimaanlage für ein Fahrzeug sowie ein Verfahren zum Klimatisieren eines Fahrzeugs jeweils nach den Oberbegriffen der unabhängigen Patentansprüche.

Der Einsatz von Kältemittelkreisläufen in Klimaanlagen in einem Wärmepumpenbetrieb einerseits und einem Kälteanlagenbetrieb andererseits ist bekannt. Derartig betriebene Klimaanlagen sind insbesondere für den Einsatz bei Kraftfahrzeugen attraktiv, da moderne Motorkonzepte weniger Abwärme, die zur Heizung des Fahrgastraumes eingesetzt werden kann, produzieren. Insbesondere gilt dies für Fahrzeuge die nicht oder zumindest nur mehr eingeschränkt über einen Verbrennungsmotor angetrieben werden, wie beispielsweise Hybridfahrzeuge oder rein elektrisch betriebene Fahrzeuge.

Aus der WO 2012/028307 A1 ist bereits ein kombinierter Kälteanlagen- und Wärmepumpenkreislauf mit einem Verdichter, einem Außenwärmeübertrager, einem Innenwärmeübertrager, dem ein Innenheizkondensator zugeordnet ist, gemäß Oberbegriff des Anspruchs 1 bekannt. Im Wärmepumpenbetrieb wird das im Verdichter komprimierte Kältemittel über den Innenheizkondensator geleitet, wo Wärme an die Luft für den Fahrgastinnenraum vom Kältemittel abgegeben wird. Danach durchströmt das abgekühlte Kältemittel ein Expansionsorgan und gelangt mit geringem Druck in den Innenwärmeübertrager, und anschließend durch ein beidseitig durchströmbares Expansionsorgan in den Außenwärmeübertrager, wo es unter Wärmeaufnahme verdampfen soll.

Durch die geringe zur Verfügung stehende Wärmeenergie, wie beispielsweise in den oben bereits erwähnten elektrisch betriebenen Fahrzeugen ist man bestrebt, weitere in einem Fahrzeug zur Verfügung stehende Wärmequellen und Wärmesenken zur Energienutzung zu erschließen. Ein beispielhaftes Konzept zur Nutzung der Wärmeenergie von Abluft ist aus der DE 10 2009 048 674 A1 bekannt. Die darin beschriebene Klimatisierungseinrichtung zeigt einen Kältemittelkreislauf auf, welcher einen Verdampfer, sowie einen Wärmetauscher, mittels welchem in den Kältemittelkreis eingebrachte Wärmeenergie in die Zuluft für einen Fahrgastraum eines Kraftwagens eigebracht werden kann, aufweist. Der Verdampfer des Kältemittelkreises ist zumindest bereichsweise in einer Abluftleitung des Fahrzeuginnenraums angeordnet und vermag so in der Abluft enthaltene Wärmeenergie in den Kältemittelkreis einzubringen.

Aufgabe der vorliegenden Erfindung ist es, eine Klimatisierung eines Fahrzeugs mit einem kältemitteldurchströmbaren Wärmepumpen- und Kälteanlagenkreislauf zu schaffen, wobei auf eine besonders einfache Weise eine bedarfsabhängige Heizung des Fahrzeuginnenraums mittels eines Innenheizkondensators verwirklicht werden soll und abhängig von Umgebungsbedingungen eine Nutzung von Abluftenergie erfolgen kann.

Die Aufgabe wird erfindungsgemäß mit den Merkmalen der unabhängigen Patentansprüche gelöst.

Eine erfindungsgemäße Klimaanlage für ein Fahrzeug mit einem von einem kältemitteldurchströmbaren als Wärmepumpen- und einem Kälteanlagenkreislauf ausgebildeten Kältemittelkreislauf und diesen zugeordnet, einem Kompressor, zumindest einem Außenwärmeübertrager und zumindest einem Innenwärmeübertrager, dem ein Innenheizkondensator zugeordnet ist und mit einer Vorrichtung zur Erzeugung eines mit dem Innenwärmeübertrager und dem Innenheizkondensator thermisch koppelbaren Luftstroms sowie einer Dosierungsvorrichtung, mittels der eine Durchströmung des Innenheizkondensators mit zumindest einem Teilstrom des thermisch gekoppelten Luftstroms dosierbar ist. In einem Wärmepumpenbetrieb ist das Kältemittel von der Hochdruckseite des Kompressors in den Innenheizkondensator, vom Innenheizkondensator durch ein Expansionsventil zum Innenwärmeübertrager, vom Innenwärmeübertrager durch ein beidseitig durchströmbares Expansionsventil zum Außenwärmeübertrager und vom Außenwärmeübertrager zur Niederdruckseite des Kompressors förderbar ist oder gefördert wird. In einem Kälteanlagenbetrieb ist das Kältemittel von der Hochdruckseite des Kompressors direkt in den Innenheizkondensator, vom Innenheizkondensator unter Umgehung des Expansionsventils zum Außenwärmeübertrager, vom Außenwärmeübertrager durch das beidseitig durchströmbare Expansionsventil zum Innenwärmeübertrager und vom Innenwärmeübertrager zur Niederdrucksseite des Kompressors förderbar.

Die Klimaanlage zeichnet sich dadurch aus, dass dem Kältemittelkreislauf ein von Kältemittel durchströmbarer Abluftwärmeübertrager zugeordnet ist, über den ein Luftstrom aus einem Fahrzeuginnenraum in einen Außenraum führbar ist oder geführt wird. Dies hat den Vorteil, dass in unterschiedlichen Betriebssituationen, die in der Abluft enthaltene Wärmeenergie vor dem Austritt aus dem Fahrzeuginnenraum nochmals genutzt und in den Kältemittelkreis eingespeist werden kann.

Für sämtliche Ausführungsformen gilt folgendes: Die von dem Kältemittel durchströmbaren Komponenten der Klimaanlage, wie beispielsweise Kompressor, Außenwärmeübertrager, Innenwärmeübertrager, Innenheizkondensator, Abluftwärmeübertrager, Expansionsventil, oder dergleichen sind über Kältemittelleitungen verbunden. Vorzugsweise ist zumindest eines der Expansionsventile, besonders bevorzugt jedes Expansionsventil, als thermostatisches oder elektronisches Expansionsventil ausgebildet. Beim thermostatischen Expansionsventil kann die in einen nachgeschalteten Verdampfer eingespritzte Kältemittelmenge temperaturabhängig geregelt werden. Die Regelung geschieht in Abhängigkeit der Überhitzung des Kältemitteldampfes am Verdampferaustritt. Es wird immer nur soviel Kältemittel in den Verdampfer eingespritzt, dass die gesamte eingespritzte Menge vollständig verdampfen kann. Elektronische Expansionsventile haben die gleiche Funktion wie die thermostatischen Expansionsventile, regeln jedoch die Flüssigkeitsmenge mittels Widerstandsthermometern.

Bevorzugt zweigt eine Kältemittelleitung über die Kältemittel zum Abluftwärmeübertrager führbar ist oder geführt wird, zwischen dem Innenheizkondensator und dem ersten Expansionsventil ab, wobei vorteilhafterweise dem Abluftwärmeübertrager ein Expansionsventil vorgeschaltet ist. Nach dem Hindurchtreten des Kältemittels durch den Innenheizkondensator lässt sich so steuern, welcher Anteil an Kältemittel über das erste Expansionsventil in Richtung des Innenwärmeübertragers und welcher Anteil an Kältemittel über das weitere Expansionsventil in Richtung des Abluftwärmeübertragers fließen kann.

Bevorzugt mündet eine Rücklaufleitung für das Kältemittel vom Abluftwärmeübertrager zwischen dem Innenwärmeübertrager und dem beidseitig durchströmbaren Expansionsventil in den Kältemittelkreislauf. Das Kältemittel kann dadurch die in dem Abluftwärmeübertrager aufgenommene Energie in den Kältemittelkreislauf einfließen lassen und so die Gesamtenergiebilanz gegebenenfalls verbessern.

In der Rücklaufleitung ist insbesondere ein Rückschlagventil angeordnet. Die Schaltung dieses Rückschlagventils ist dabei dergestalt, dass dieses in Strömungsrichtung vom Abluftwärmeübertrager zum Rückschlagventil hin durchlässig ist und in der entgegengesetzten Richtung den Durchfluss von Kältemittel unterbindet.

Je nach den Umgebungsbedingungen und den Erfordernissen hinsichtlich einer Aufheiz- oder Kühlanforderung im Fahrzeuginnenraum oder anderer zu temperierender Komponenten wie einer Antriebsbatterie, einem Elektromotor, Leistungselektronikteilen, einer oder mehrerer Brennstoffzellen oder ähnliches, arbeitet der Abluftwärmeübertrager als Verdampfer, Kondensator oder Gaskühler. Insbesondere in einem Wärmepumpenbetrieb wird der Abluftwärmeübertrager als Verdampfer genutzt, in einem Kälteanlagenbetrieb hingegen bevorzugt als Kondensator oder Gaskühler. Der Abluftwärmeübertrager ist bevorzugt als ein Bauteil ausgebildet, das die oben beschriebenen Funktionen wahrnehmen kann. Alternativ kommt auch eine zweiteilige Ausführung in Betracht, wobei in einem ersten Teil des Abluftwärmeübertragers die Übernahme der Verdampferfunktion und in einem zweiten Teil die Übernahme der Kondensator - oder Gaskühlerfunktion gewährleistet wird. Besonders bevorzugt ist für diesen Fall ein Umschaltventil vorgesehen, das abhängig vom Betriebszustand der Klimaanlage den ersten oder zweiten Teil des Abluftwärmeübertragers in den Kältemittelkreis zuschaltet.

In einer weiteren Ausgestaltung der Klimaanlage ist diese in einem Fahrzeug so angeordnet, dass der Abluftwärmeübertrager in einer Trennwand zwischen dem Innenraum und einem Außenraum des Kraftfahrzeugs, insbesondere einem Laderaum eines Nutzkraftfahrzeuges aufgenommen ist. Die Nutzung der aus dem Fahrzeug austretenden Luft ist dabei auf einfache Weise, beispielsweise ohne weitere, gesondert ausgebildete Luftführungen möglich. Eine Halterung des Abluftwärmeübertragers kann in dem stabilen Wandbereich besonders gut bewerkstelligt werden.

Ein erfindungsgemäßes Verfahren zum Klimatisieren eines Fahrzeugs zeichnet sich dadurch aus, dass die vorangehend beschriebene Klimaanlage in einem Wärmepumpenbetrieb oder einem Kälteanlagenbetrieb betrieben wird, wobei sowohl im Wärmepumpenbetrieb als auch im Kälteanlagenbetrieb das Kältemittel kältemittelseitig stromab des Innenheizkondensators durch den Abluftwärmeübertrager förderbar ist oder durch diesen gefördert wird.

Weitere Vorteile, Merkmale und Einzelheiten ergeben sich aus der nachfolgenden Beschreibung in der - gegebenenfalls unter Bezug auf die Zeichnung - zumindest ein Ausführungsbeispiel im Einzelnen beschrieben ist. Beschriebene und/oder dargestellte Merkmale bilden für sich oder in beliebiger sinnvoller Kombination die Erfindung, im Rahmen der Ansprüche. Gleiche, ähnliche und/oder zumindest gleiche Teile sind mit Bezugszeichen versehen.

Es zeigen
- Figur 1: einen Wärmepumpen- und Kälteanlagenkreislauf, wobei sowohl im Wärmepumpenbetrieb als auch im Kälteanlagenbetrieb das Kältemittel von de Hochdruckseite des Kompressors in den Innenheizkondensator förderbar ist.
- Figur 2: einen Wärmepumpenkreislauf, der thermisch mit einer Wärme- und/oder Kältesenke gekoppelt ist.
- Figur 3: einen Kälteanlagenkreislauf der thermisch mit einer Wärme- und/oder Kältesenke gekoppelt ist.
- Figur 4: den Kälteanlagenkreislauf der Figur 3 in einer Reheat-Betriebsweise.
- Figur 5: eine Variante des Wärmepumpen- und Kälteanlagen-Kreislaufs der Figur 1 mit zwei Fluid-Kältemittelwärmetauschern
- Figur 5a: eine Modifikation der Kreisläufe der Figur 5
- Figur 6: einen Kälteanlagenkreislauf gemäß der Figur 5 und
- Figur 7: einen Wärmepumpenkreislauf gemäß der Figur 5

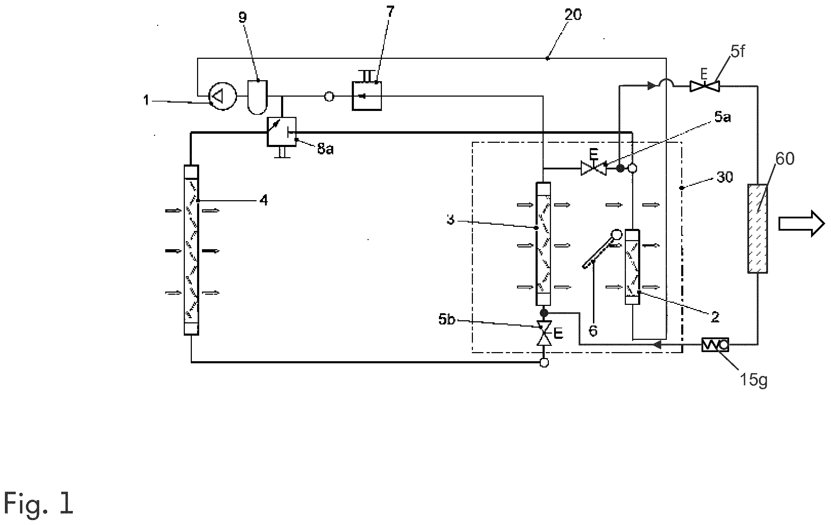

Figur 1 zeigt einen als Wärmepumpenkreislauf und Kälteanlagenkreislauf ausgebildeten Kältemittelkreislauf eines nicht näher dargestellten Fahrzeugs, insbesondere eines Kraftfahrzeugs. Sowohl der Wärmepumpenkreislauf als auch der Kälteanlagenkreislauf sind von einem Kältemittel durchströmbar und dienen zum Klimatisieren eines ebenfalls nicht näher dargestellten Innenraums mit einer Klimaanlage. Es versteht sich, dass die einzelnen Komponenten der Klimaanlage bzw. des Wärmepumpenkreislaufs sowie des Kälteanlagenkreislaufs über ein Steuergerät mit dazugehörigen Sensoren, Aktuatoren und elektrischen Anschlüssen gesteuert bzw. geregelt wird. Wärmepumpenkreislauf und Kälteanlagenkreislauf beinhalten insbesondere einen Kompressor 1, einen Innenheizkondensator 2, einen vorzugsweise als Verdampfer ausgebildeten Innenwärmetauscher 3, einen vorzugsweise als Kondensator, Gaskühler bzw. Verdampfer ausgebildeten Außenwärmeübertrager 4, einen erfindungsgemäß als Verdampfer oder Kondensator ausgebildeten Abluftwärmeübertrager 60, Expansionsventile 5a, 5b, 5f, eine nicht näher dargestellte Vorrichtung, üblicherweise ein Gebläse, zur Erzeugung eines mit dem Wärmeübertrager 3 und dem Innenheizkondensator 2 thermisch gekoppelten Luftstroms, in Figur 1 symbolisiert durch Pfeile, eine Dosiervorrichtung 6, mittels der eine Durchströmung des Innenheizkondensators mit zumindest einem Teilstrom des thermisch gekoppelten Luftstroms dosierbar ist, ein Absperrventil 7, mit dem die Beförderung von Kältemittel vom Innenwärmeübertrager 3 zur Niederdruckseite des Kompressors 1 ermöglicht und/oder unterbrochen werden kann, ein Umschaltventil 8a und einen dem Kompressor niederdruckseitig vorgeschalteten Sammler 9, der jedoch optional ist. Die Dosiervorrichtung 6 ist vorzugsweise als Temperaturklappe ausgebildet, mit der der den Innenheizkondensator 2 beaufschlagende Luftstrom gelenkt und/oder unterbrochen werden kann. Die Vorrichtung zur Erzeugung des Luftstroms sowie die Dosiervorrichtung 6 sind gemeinsam in einem Gehäuse 30 eines Klimagerätes untergebracht, wobei es sich versteht, dass auch andere Konfigurationen dieser beiden Komponenten denkbar sind. Es versteht sich, dass die einzelnen Komponenten des Kältemittelkreislaufs über Kältemittelleitungen 20 miteinander verbunden sind.

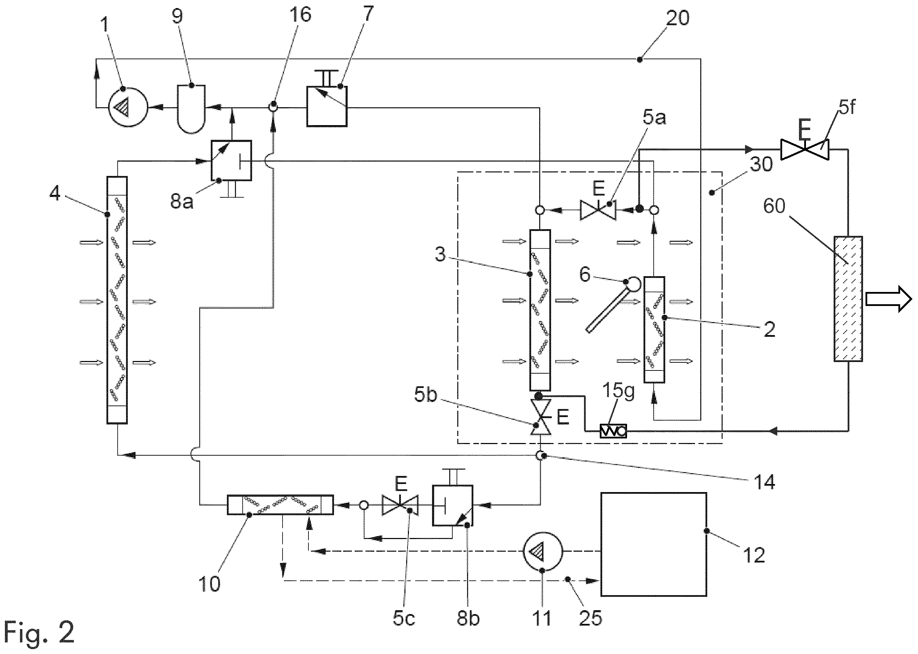

Figur 2 zeigt den Kältemittelkreislauf der Figur 1 im Wärmepumpenbetrieb, wobei zusätzlich noch ein optionaler mittels eines Fluid-Kältemittelwärmetauschers 10 thermisch mit der Klimaanlage verbundener Fluidkreislauf dargestellt ist, der zumindest eine fluidseitig mit dem Kältemittelwärmetauscher 10 verbundene Wärme- und/oder Kältesenke 12 umfasst. Zur thermischen Ankopplung des Fluidkreislaufs an den Kältemittelkreislauf ist eine Verzweigung 14 sowie ein Anschlusspunkt 16 im Kältemittelkreislauf vorgesehen. Zwischen der Verzweigung 14 und dem Anschlusspunkt 16 sind nacheinander ein Umschaltventil 8b, ein Expansionsventil 5c sowie der Fluid-Kältemittelwärmetauscher 10 angeordnet. Im Fluidkreislauf ist eine Pumpe 11 zur Förderung des Fluids des Fluidkreislaufs durch den Fluid-Kältemittelwärmetauscher angeordnet. Der Fluidkreislauf weist ferner Fluidleitungen 20 auf, die die verschiedenen Komponenten mit einander verbinden.

Im Wärmepumpenbetrieb wird das Kältemittel von der Hochdruckseite des Kompressors 1 direkt in den Innenheizkondensator 2 gefördert, durchströmt das erste Expansionsventil 5a, wird anschließend in den dem Expansionsventil 5a nachgeschalteten Innenwärmeübertrager 3 gefördert, daraufhin durch das beidseitig durchströmbare Expansionsventil 5b zur nachgeschalteten Verzweigung 14 gefördert, von dieser zum Außenwärmeübertrager 4 befördert, wo es Wärme aufnehmen kann und anschließend zum nachgeschalteten Umschaltventil 8a gefördert. Vom Verzweigungspunkt 14 erfolgt eine Beförderung des Kältemittels in Abhängigkeit vom Schaltzustand des Umschaltventils 8b, worauf später eingegangen wird. Vom Umschaltventil 8a erfolgt eine Förderung des Kältemittels zur Niederdruckseite des Kompressors 1, gegebenenfalls über den zwischengeschalteten Sammler 9. Im in Figur 2 dargestellten Wärmepumpenbetrieb erfolgt eine Aufnahme bzw. Abgabe von Wärme, der dem Innenwärmetauscher 3 durchströmenden Luft in Abhängigkeit von ihrem jeweiligen Zustand, insbesondere ihrer Temperatur. Die derart konditionierte Luft wird zumindest teilweise in Abhängigkeit von der Stellung der Temperaturklappe 6 dem Innenheizkondensator 2 zugeführt und von diesem erwärmt und in den Fahrzeuginnenraum geführt. Das Umschaltventil 8b, befindet sich in einem Schaltzustand, in dem das Kältemittel vom Verzweigungspunkt 14 durch den Fluid-Kältemittelwärmetauscher 10 gefördert wird, so dass eine Wärmeaufnahme an der Wärmesenke bzw. eine Wärmeabgabe an die Kältesenke erfolgt, je nach dem Temperaturniveau des im Fluidkreislaufs zirkulierenden Fluids. Eine Wärmeaufnahme wird verbessert, wenn das Kältemittel durch das Expansionsventil 5c gefördert und daher abgekühlt den Wärmetauscher 10 durchläuft. Nach Durchlauf des Fluid-Kältemittelwärmetauschers 10 wird das Kältemittel zum Anschlusspunkt 16 und anschließend zum nachgeschalteten Sammler 9 bzw. zur Niederdruckseite des Kompressors 1 gefördert.

Abhängig von den Innenraum- und/oder Außenraumbedingungen ist zusätzlich Kältemittel zwischen dem Innenheizkondensator 2 und dem Expansionsventil 5a entnehmbar und über ein weiteres Expansionsventil 5f einem Abluftwärmeübertrager 60 zuführbar. Insbesondere wenn für den Innenraum eine hohe Heizleistung angefordert wird, ist es günstig zumindest einen Teil des Kältemittels über das Expansionsorgan 5f zu entspannen und die Wärmeenergie der aus dem gewärmten Innenraum strömenden Abluft zu nutzen um das Kältemittel am Abluftwärmeübertrager 60 aufzuwärmen, bevor es wieder dem Kältemittelkreis zugeführt wird. Wie groß der Anteil des über den Abluftwärmeübtrager 60 geführten Kältemittelstroms ist, hängt wie bereits ausgeführt insbesondre von den Innen- und Außentemperaturen, den Heiz- bzw. Kühlanforderungen im Innenraum und/oder dem Zustand der Wärme/Kältesenke 12 ab und ist günstigerweise in einem Kennfeld hinterlegt, so dass sich für jeden Systemzustand ein energiebilanzmäßig günstigster Schaltzustand einstellt. Der Abluftwärmeübertrager 60 arbeitet im Wärmepumpenbetrieb als Verdampfer.

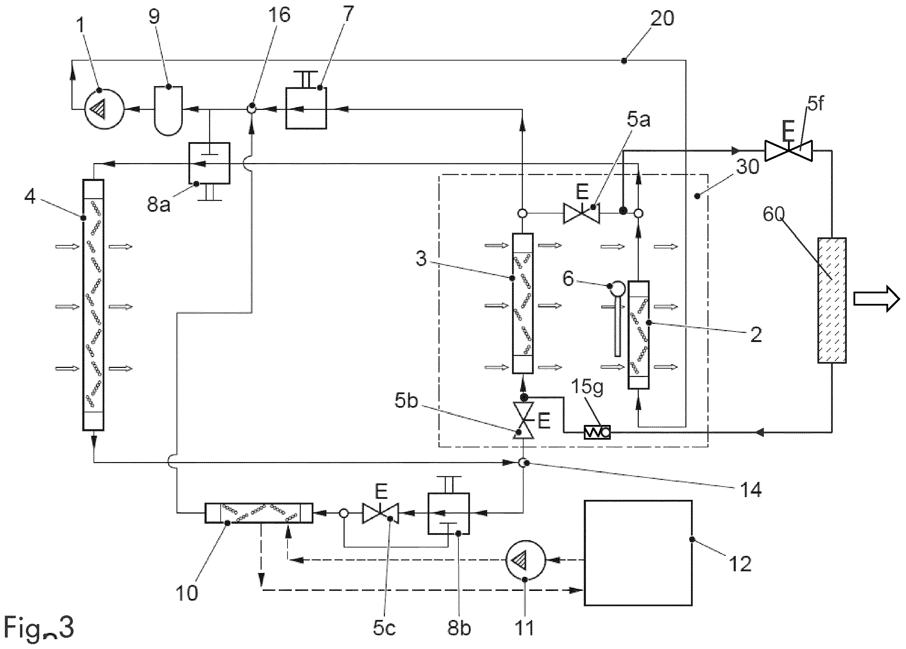

Figur 3 zeigt den Kältemittelkreislauf der Figur 1 in einem Kälteanlagenbetrieb, wobei Kältemittel von der Niederdruckseite des Kompressors 1 zum Innenheizkondensator 2, von diesem zum Umschaltventil 8a, von diesem zum Außenwärmeübertrager 4 und von diesem zum beidseitig durchströmbaren Expansionsventil 5b gefördert wird. Dem beidseitig durchströmbaren Expansionsventil ist optional die Verzweigung 14 vorgeschaltet über die Analogfigur 2 ein optionaler Wärmekreislauf mit einer Wärme- und/oder Kältesenke 12 thermisch mit der Klimaanlage gekoppelt werden kann. Das Kältemittel wird durch das Expansionsventil 5b und den Innenwärmeübertrager 3 über das geöffnete Expansionsventil 7 und den optionalen Sammler 9 zur Niederdruckseite des Kompressors 1 gefördert. Im Kälteanlagenbetrieb erfolgt keine Förderung von Kältemittel durch das Expansionsventil 5a; vorzugsweise ist das Expansionsventil 5a geschlossen. Aufbau und Funktion des Fluidkreislaufs in Figur 3 ist analog zu dem in Figur 2 dargestellten, wobei jedoch in Figur 3 ein Schaltzustand des Umschaltventils 8b dargestellt ist, bei dem Kältemittel durch das Expansionsventil 5c gefördert wird. Bei dem in Figur 3 dargestellten Kälteanlagenbetrieb des Kältekreislaufs ist die Temperaturklappe 6 in eine Stellung gebracht, bei der nur eine geringe Durchströmung, bspw. von weniger als 2,5 % des durch den Innenwärmeübertrager 3 geförderten Luftmassenstroms, durch den Innenheizkondensator 2 gefördert wird. Damit erfolgt nur eine geringe Heizung des Fahrzeuginnenraums. Gegebenenfalls kann es für den Kälteanlagenbetrieb günstig sein, einen Teil des Kältemittels über das Expansionsventils 5f zu entspannen und bei im Vergleich zur Außentemperatur geringen Innenraumtemperatur die gekühlte Abluft zur weiteren Kühlung des Kältemittels am Abluftwärmeübertrager 60 einzusetzen und das Kältemittel anschließend dem Kreislauf wieder zuzuführen. Auch in diesem Fall erfolgt die Art und der Umfang der Zuschaltung des Abluftwärmeübertragers 60 in Abhängigkeit der Gesamtenergiebilanz. Der Abluftwärmeübertrager 60 wird hier bevorzugt als Kondensator genutzt.

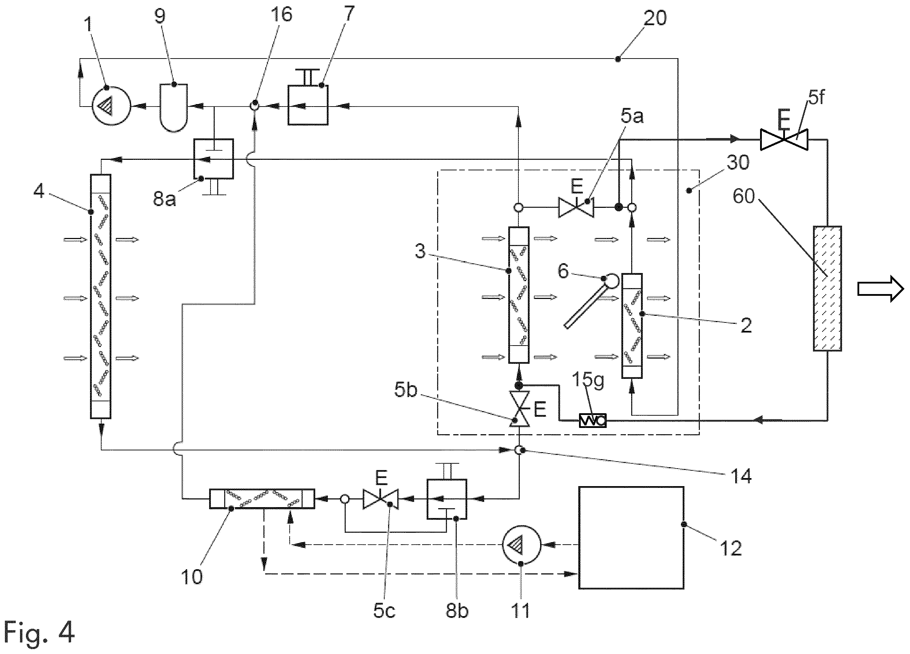

Figur 4 zeigt eine weitere Betriebsweise des erfindungsgemäßen Kältemittelkreislaufs, analog zu der Darstellung in Figur 4, wobei im Unterschied dazu die Temperaturklappe 6 eine Stellung einnimmt, bei der ein größerer Anteil des Luftmassenstroms, der durch den Wärmeübertrager strömenden Luftstroms den Innenheizkondensator 2 durchströmt. In der Darstellung der Figur 4 wird demnach der Kältekreislauf in einem Kälteanlagenbetrieb betrieben, wobei jedoch durch den Innenheizkondensator 6 eine Aufwärmung von zuvor vom Innenwärmeübertrager 3 getrockneter Luft erfolgt.

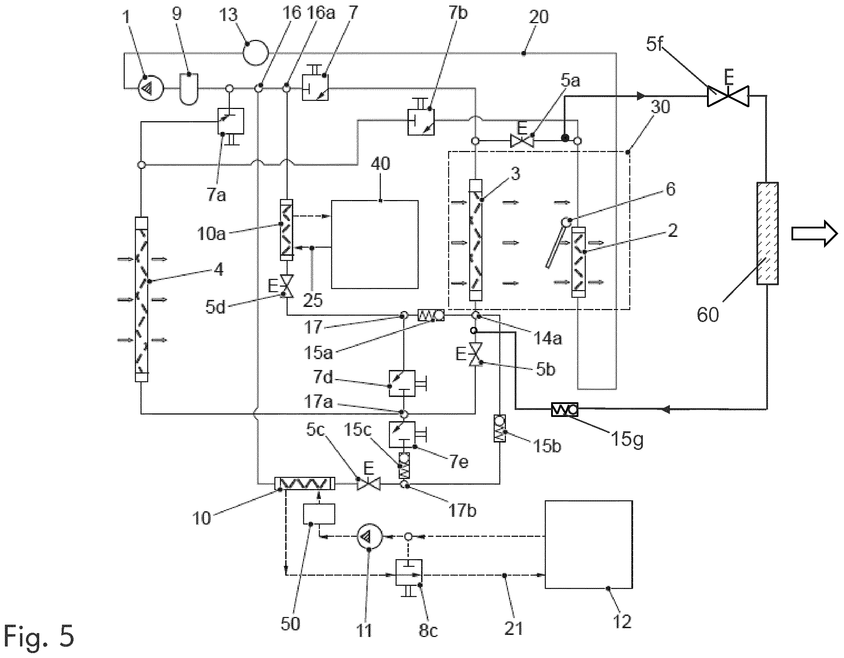

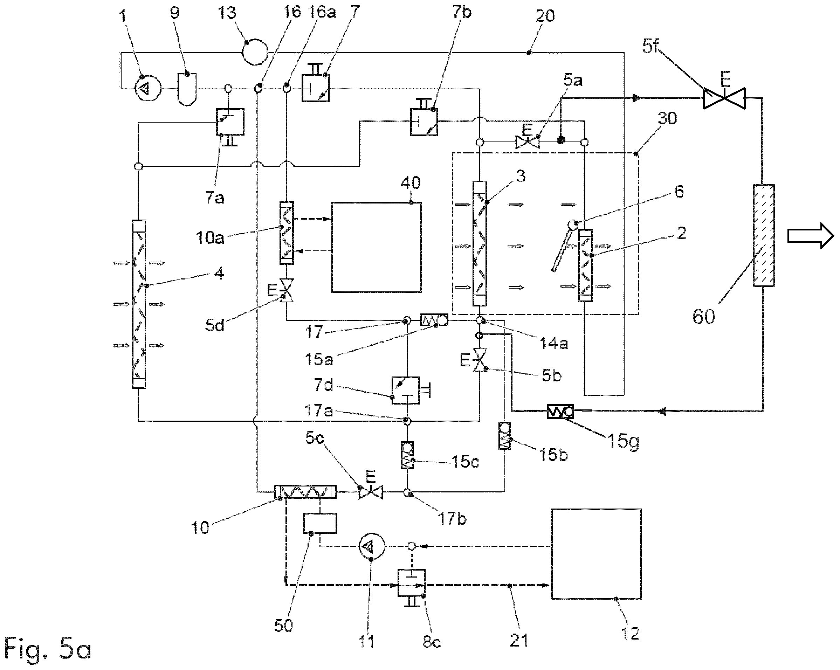

Figur 5 zeigt eine weitere Variante des Kältemittelkreislaufs der Figur 1, wobei jedoch im Unterschied zu den vorherigen Varianten ein Verzweigungspunkt 14a zwischen dem beidseitig durchströmbaren Expansionsventil 5b und dem Verdampfer 3 vorgesehen ist, stromaufwärts der Niederdruckseite des Kompressors 1 ist ein erster Anschlusspunkt 16 sowie ein zweiter Anschlusspunkt 16a vorgesehen. Zwischen der Verzweigung 14a und dem Anschlusspunkt 16 sind nacheinander ein Rückschlagventil 15b und ein Verzweigungspunkt 17b angeordnet. Zwischen dem Verzweigungspunkt 17b und dem Anschlusspunkt 16 sind im Kältemittelkreislauf ein Expansionsventil 5c sowie ein erster Fluid-Kältemittelwärmetauscher 10 angeordnet. Der Wärmetauscher 10 ist analog zu den Figuren 2 bis 4 über einen Fluidkreislauf an eine Wärme-/Kältesenke 12 thermisch gekoppelt. Zwischen der Wasserpumpe 11 und dem Wärmetauscher 10 ist fluidseitig ein Zusatzheizer 50, beispielsweise ein Wasser-PTC-Heizer, ein Brennstoffzuheizer oder eine Hochvoltbatterie geschaltet. Der Verzweigungspunkt 17 ist ferner mit dem Kältemittelkreislauf über einen Verzweigungspunkt 17a verbunden, der zwischen dem Expansionsventil 5b und dem Außenwärmetauscher 4 angeordnet ist. Zwischen dem Verzweigungspunkt 17a und dem Verzweigungspunkt 17b sind ein Absperrventil 7e und ein Rückschlagventil 15c angeordnet, wobei das Rückschlagventil 15c lediglich einen Durchfluss von Kältemittel vom Verzweigungspunkt 17a zum Verzweigungspunkt 17b zulässt. Zwischen dem Verzweigungspunkt 14a und dem zweiten Fluid-Kältemittelwärmetauscher 10a sind nacheinander ein Rückschlagventil 15a, ein Verzweigungspunkt 17 sowie ein Expansionsventil 5d angeordnet, wobei das Rückschlagventil 15a einen Durchfluss von Kältemittel nur vom Verzweigungspunkt 14a zum Verzweigungspunkt 17 zulässt. Zwischen dem Verzweigungspunkt 17 und dem Verzweigungspunkt 17a ist ein Absperrventil angeordnet. Als möglicher Abzweig von Kältemittel ist analog zu dem vorhergehenden Ausführungsbeispiel zwischen dem Innenheizkondensator 2 und dem Expansionsventil 5a eine Kältemittelleitung zu einem Expansionsventil 5f, dem Abluftwärmeübertrager 60 und dem Rückschlagventil zur Kältemittelleitung zwischen dem Verdampfer 3 und dem beidseitig durchströmbaren Expansionsventil 5b geführt. Zur Zuschaltung des Abluftwärmeübertragers im Wärmepumpenbetrieb oder im Kälteanlagenbetrieb gilt das zum ersten Ausführungsbeispiel ausgeführte.

Figur 5a zeigt eine Modifikation des in Figur 5 dargestellten Kältemittelkreislaufs, wobei zwischen dem Verzweigungspunkt 17a und dem Verzweigungspunkt 17b lediglich ein Rückschlagventil 15c angeordnet ist und das in Figur 5 vorgesehene Absperrventil fehlt. Falls das Expansionsventil 5c als schaltbares Expansionsventil ausgebildet ist, sind die Kältemittelkreisläufe der Figuren 5 und 5a, was die möglichen Kältemittelflüsse angeht, funktionsgleich.

In den Figuren 5 und 5a ist der Wärmetauscher 10a mit einer Wärme-/Kältesenke 40 verbunden, die analog zur Wärme-/Kältesenke 12 ausgebildet sein kann. Es versteht sich, dass fluidseitig ähnliche Komponenten wie zwischen dem Wärmetauscher 10 und der Wärme-/Kältesenke 12 vorgesehen sein können.

Die Anordnung des Verzweigungspunktes 14a vor dem Expansionsventil 5b ermöglicht eine bedarfsgerechte anteilsmäßige Aufteilung von Kältemittel, wobei die Aufteilung durch die Einstellung der elektrischen Expansionsventile 5b, 5c und 5d bestimmt werden kann. Mittels der Absperrventile 7d und 7e kann der Kältemittelfluss, insbesondere auch die im Kältemittelkreis vor den Wärmetauschern 14 und 14a besser geregelt werden. Es versteht sich, dass auch eine Ausführungsform von der Erfindung umfasst wird, bei der von der Verzweigung 14a lediglich eine Kältemittelleitung zum Verzweigungspunkt 16 bzw. zum Verzweigungspunkt 16a mit dazwischen geschalteten Wärmetauschern 10 bzw. 10a vorgesehen sind.

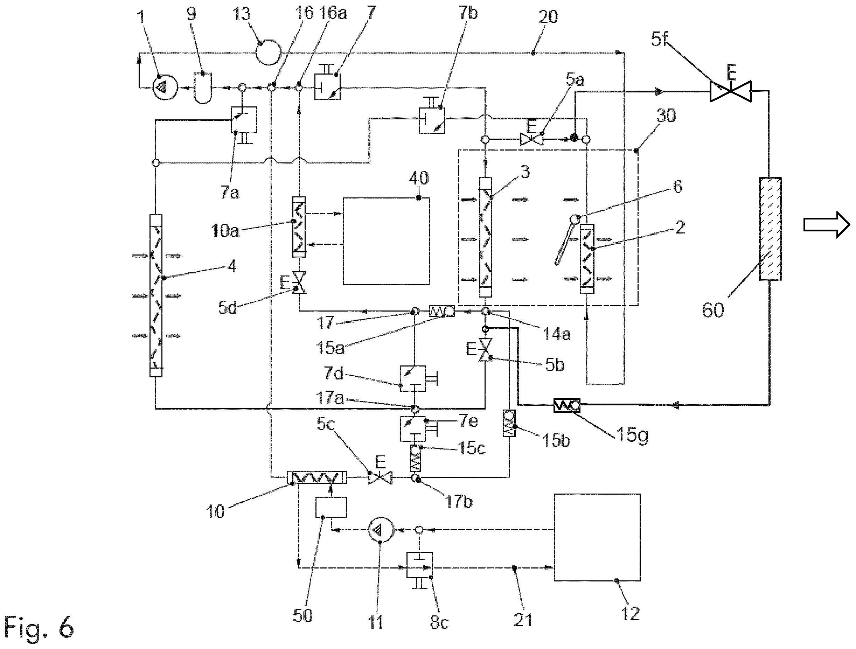

Figur 6 zeigt den Kältemittelkreislauf der Figur 5 bei einer Einstellung der Ventile 7d, 7e und 7a, bei der über die Wärmetauscher 10 und 10a gekühlt und geheizt wird, während der Außenwärmetauscher 4 außer Betrieb ist.

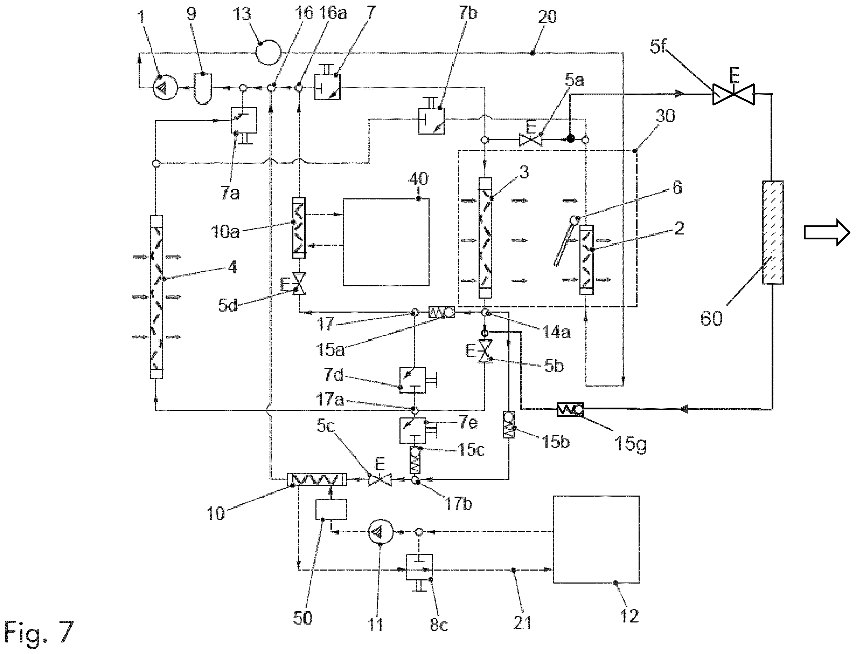

Figur 7 zeigt den Kältemittelkreislauf der Figur 5, wobei durch die Schaltung der Ventile 7a, 7d und 7e ein paralleles Heizen mit Wärmeenergie aus der Luft, Wärmeenergie aus der Wärme-/Kältesenke 12 oder dem Zusatzheizer 50 sowie aus der Wärme-/Kältesenke 40 erfolgen kann.

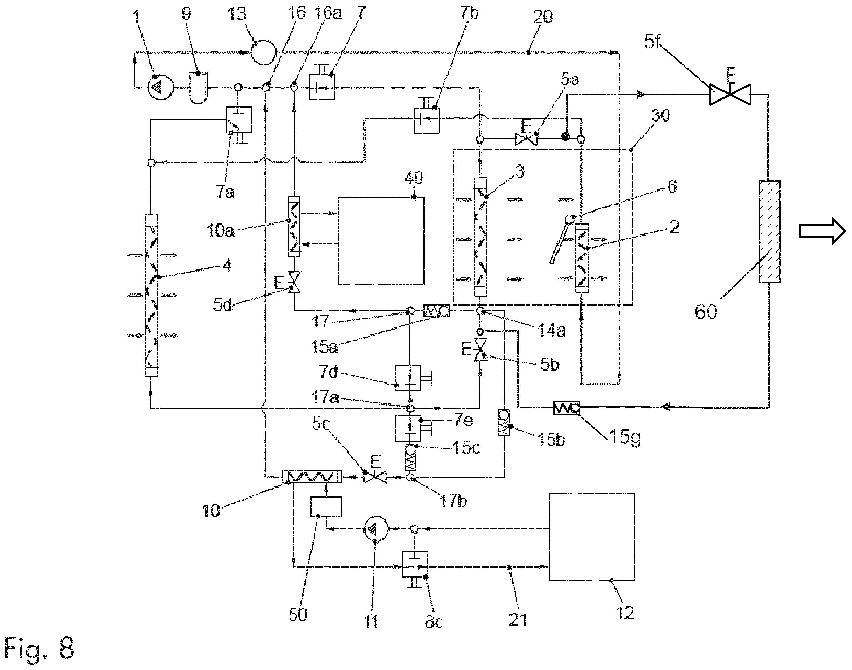

Figur 8 zeigt für den Kältemittelkreislauf der Figur 5 eine Einstellung der Ventile 7, 7a, 7b, bei der warmes Kältemittel dem Außenwärmetauscher 4 zugeführt werden kann und gleichzeitig der Fahrzeuginnenraum über den Heizkondensator 2 geheizt werden kann, wobei zusätzliche Wärmeenergie gegebenenfalls über die Wärme-/Kältesenke 12, den Zusatzheizer 50 sowie die Wärme-/Kältesenke 40 zugeführt werden kann.

### Bezugszeichenliste

- 1: Kompressor
- 2: Innenheizkondensator
- 3: Verdampfer
- 4: Außenwärmeübertrager
- 5a, 5b, 5c, 5d, 5e, 5f: Expansionsventil
- 6: Dosiervorrichtung
- 7, 7a, 7b, 7c, 7d, 7e, 7f: Absperrventil
- 8a, 8b, 8c, 8d, 8e, 8f: Umschaltventil
- 9: Sammler
- 10, 10a, 10b: Fluid-Kältemittelwärmetauscher
- 11: Fluidpumpe
- 12: Wärme-/Kältesenke
- 13: Schalldämpfer
- 14, 14a: Verzweigungspunkt
- 15a, 15b, 15c, 15d, 15e, 15f,15g: Rückschlagventil
- 16, 16a, 16b: Anschlusspunkt
- 17, 17a, 17b: Verzweigungspunkt
- 18, 18a, 18b, 18c: Verzweigungspunkt
- 19: Verzweigungspunkt
- 20: Kältemittelleitung
- 21: Fluidleitung
- 22: p,T-Sensor
- 25: Fluidleitung
- 30: Klimagerät
- 40: Wärme-/Kältesenke
- 50: Zuheizer
- 60: Abluftwärmeübertrager

## Patentansprüche

1. Klimaanlage für ein Fahrzeug mit einem von einem Kältemittel durchströmbaren, als Wärmepumpen- sowie einem Kälteanlagenkreislauf ausgebildeten Kältemittelkreislauf und diesen zugeordnet, einem Kompressor (1), zumindest einem Außenwärmeübertrager (4), zumindest einem Innenwärmeübertrager (3), dem ein Innenheizkondensator (2) zugeordnet ist, wobei eine Vorrichtung zur Erzeugung eines mit dem Innenwärmeübertrager (3) und dem Innenheizkondensator (2) thermisch koppelbaren Luftstroms sowie einer Dosierungsvorrichtung (6), mittels der eine Durchströmung des Innenheizkondensators (2) mit zumindest einem Teilstrom des thermisch gekoppelten Luftstroms dosierbar ist, vorgesehen ist, wobei
- in einem Wärmepumpenbetrieb das Kältemittel von der Hochdruckseite des Kompressors (1) in den Innenheizkondensator (2) förderbar ist oder gefördert wird, vom Innenheizkondensator (2) durch ein erstes Expansionsventil (5a) zum Innenwärmeübertrager (3) förderbar ist oder gefördert wird, vom Innenwärmeübertrager (3) durch ein beidseitig durchströmbares Expansionsventil (5b) zum Außenwärmeübertrager (4) förderbar ist oder gefördert wird, vom Außenwärmeübertrager (4) zur Niederdruckseite des Kompressors (1) förderbar ist oder gefördert wird und
- in einem Kälteanlagenbetrieb das Kältemittel von der Hochdruckseite des Kompressors (1) in den Innenheizkondensator (2) förderbar ist oder gefördert wird, unter Umgehung des ersten Expansionsventils (5a) vom Innenheizkondensator (2) zum Außenwärmeübertrager (4) förderbar ist oder gefördert wird, vom Außenwärmeübertrager (4) durch das beidseitig durchströmbare Expansionsventil (5b) zum Innenwärmeübertrager (3), vom Innenwärmeübertrager (3) zur Niederdrucksseite des Kompressors (1) förderbar ist
**dadurch gekennzeichnet, dass** dem Kältemittelkreislauf ein von Kältemittel durchströmbarer Abluftwärmeübertrager (60) zugeordnet ist, über den ein Luftstrom aus einem Fahrzeuginnenraum in einen Außenraum führbar ist oder geführt wird und der Abluftwärmeübertrager (60) in einem Wärmepumpenbetrieb als Verdampfer und in einem Kälteanlagenbetrieb als Kondensator oder Gaskühler arbeitet.

2. Klimaanlage nach Anspruch 1, **dadurch gekennzeichnet, dass** eine Kältemittelleitung über die Kältemittel zum Abluftwärmeübertrager (60) führbar ist, zwischen dem Innenheizkondensator (2) und dem ersten Expansionsventil (5a) abzweigt.

3. Klimaanlage nach einem der Ansprüche 1 bis 2, **dadurch gekennzeichnet, dass** dem Abluftwärmeübertrager (60) ein Expansionsventil (5f) vorgeschaltet ist.

4. Klimaanlage nach einem der vorhergehenden Ansprüche, **dadurch gekennzeichnet, dass** eine Rücklaufleitung für Kältemittel vom Abluftwärmeübertrager (60) zwischen dem Innenwärmeübertrager (3) und dem beidseitig durchströmbaren Expansionsventil (5b) in den Kältemittelkreislauf mündet.

5. Klimaanlage nach Anspruch 4, **dadurch gekennzeichnet, dass** in der Rücklaufleitung ein Rückschlagventil (15g) angeordnet ist.

6. Kraftfahrzeug mit einer Klimaanlage nach einem der vorhergehenden Ansprüche, **dadurch gekennzeichnet, dass** der Abluftwärmeübertrager (60) in einer Trennwand zwischen dem Innenraum und einem Laderaum des Kraftfahrzeuges angeordnet ist.

7. Verfahren zum Klimatisieren eines Fahrzeugs, **dadurch gekennzeichnet, dass** die Klimaanlage nach einem der Ansprüche 1 bis 5 in einem Wärmepumpenbetrieb oder in einem Kälteanlagenbetrieb betrieben wird, wobei sowohl im Wärmepumpenbetrieb als auch im Kälteanlagenbetrieb das Kältemittel kälemittelseitig stromab des Innenheizkondensators (2) durch den Abluftwärmeübertrager (60) förderbar ist oder durch diesen gefördert wird.

## Claims

1. Air-conditioning system for a vehicle, having a refrigerant circuit through which a refrigerant can flow and which is formed as a heat-pump circuit and a refrigeration-system circuit and having, assigned to said refrigerant circuit, a compressor (1), at least one exterior heat exchanger (4), at least one interior heat exchanger (3) which is assigned an interior heating condenser (2), wherein a device for generating an air flow which can be thermally coupled to the interior heat exchanger (3) and to the interior heating condenser (2) is provided, and a dosing device (6) is provided, by means of which a throughflow of the interior heating condenser (2) with at least a partial flow of the thermally coupled air flow can be metered, wherein
- in a heat pump mode, the refrigerant can be or is conveyed from the high-pressure side of the compressor (1) into the interior heating condenser (2), can be or is conveyed from the interior heating condenser (2) through a first expansion valve (5a) to the interior heat exchanger (3), can be or is conveyed from the interior heat exchanger (3) through an expansion valve (5b), which can be flowed through in both directions, to the exterior heat exchanger (4), can be or is conveyed from the exterior heat exchanger (4) to the low-pressure side of the compressor (1), and
- in a refrigeration system mode, the refrigerant can be or is conveyed from the high-pressure side of the compressor (1) into the interior heating condenser (2), can be or is conveyed, bypassing the first expansion valve (5a), from the interior heating condenser (2) to the exterior heat exchanger (4), can be conveyed from the exterior heat exchanger (4) through the expansion valve (5b), which can be flowed through in both directions, to the interior heat exchanger (3), from the interior heat exchanger (3) to the low-pressure side of the compressor (1),
**characterized in that** the refrigerant circuit is assigned an exhaust-air heat exchanger (60) which can be flowed through by refrigerant and via which an air flow from a vehicle interior compartment can be or is conducted into an exterior space, and the exhaust-air heat exchanger (60), in a heat pump mode, operates as an evaporator and, in a refrigeration system mode, operates as a condenser or gas cooler.

2. Air-conditioning system according to Claim 1, **characterized in that** a refrigerant line via which refrigerant can be conducted to the exhaust-air heat exchanger (60) branches off between the interior heating condenser (2) and the first expansion valve (5a).

3. Air-conditioning system according to either of Claims 1 and 2, **characterized in that** an expansion valve (5f) is connected upstream of the exhaust-air heat exchanger (60).

4. Air-conditioning system according to one of the preceding claims, **characterized in that** a return line for refrigerant from the exhaust-air heat exchanger (60) opens into the refrigerant circuit between the interior heat exchanger (3) and the expansion valve (5b) which can be flowed through in both directions.

5. Air-conditioning system according to Claim 4, **characterized in that** a check valve (15g) is arranged in the return line.

6. Motor vehicle having an air-conditioning system according to one of the preceding claims, **characterized in that** the exhaust-air heat exchanger (60) is arranged in a partition between the interior compartment and a luggage compartment of the motor vehicle.

7. Method for the air-conditioning of a vehicle, **characterized in that** the air-conditioning system according to one of Claims 1 to 5 is operated in a heat pump mode or in a refrigeration system mode, wherein, both in the heat pump mode and in the refrigeration system mode, the refrigerant can be or is conveyed, downstream of the interior heating condenser (2) at the refrigerant side, through the exhaust-air heat exchanger (60).

## Revendications

1. Installation de climatisation pour un véhicule avec un circuit d'agent réfrigérant pouvant être parcouru par un agent réfrigérant et réalisé sous la forme d'un circuit de pompe à chaleur et d'installation de refroidissement et associé à ceux-ci un compresseur (1), au moins un échangeur de chaleur extérieur (4), au moins un échangeur de chaleur intérieur (3) auquel un condenseur de chauffage intérieur (2) est associé, dans lequel il est prévu un dispositif pour produire un flux d'air pouvant être couplé thermiquement à l'échangeur de chaleur intérieur (3) et au condenseur de chauffage intérieur (2) ainsi qu'avec un dispositif de dosage (6), au moyen duquel un écoulement à travers le condenseur de chauffage intérieur (2) peut être dosé avec au moins un flux partiel du flux d'air thermiquement couplé, dans lequel
- dans un mode de fonctionnement en pompe à chaleur, l'agent réfrigérant peut être ou est transporté à partir du côté haute pression du compresseur (1) dans le condenseur de chauffage intérieur (2), peut être ou est transporté depuis le condenseur de chauffage intérieur (2) à l'échangeur de chaleur intérieur (3) à travers une première soupape de détente (5a), peut être ou est transporté depuis l'échangeur de chaleur intérieur (3) à l'échangeur de chaleur extérieur (4) à travers une soupape de détente (5b) pouvant être traversée de part et d'autre, peut être ou est transporté depuis l'échangeur de chaleur extérieur (4) au côté basse pression du compresseur (1) et
- dans un mode de fonctionnement en installation de refroidissement l'agent réfrigérant peut être ou est transporté depuis le côté haute pression du compresseur (1) dans le condenseur de chauffage intérieur (2), peut être ou est transporté en contournant la première soupape de détente (5a) depuis le condenseur de chauffage intérieur (2) à l'échangeur de chaleur extérieur (4), peut être transporté depuis l'échangeur de chaleur extérieur (4) à l'échangeur de chaleur intérieur (3) à travers la soupape de détente (5b) pouvant être traversée de part et d'autre, peut être transporté depuis l'échangeur de chaleur intérieur (3) au côté basse pression du compresseur (1),
**caractérisée en ce qu'**au circuit d'agent réfrigérant est associé un échangeur de chaleur d'air d'échappement (60) pouvant être parcouru par l'agent réfrigérant, par lequel un flux d'air peut être ou est conduit hors de l'espace intérieur du véhicule dans un espace extérieur et l'échangeur de chaleur d'air d'échappement (60) fonctionne en évaporateur dans un mode de fonctionnement en pompe à chaleur et en condenseur ou refroidisseur de gaz dans un mode de fonctionnement en installation de refroidissement.

2. Installation de climatisation selon la revendication 1, **caractérisée en ce qu'**une conduite d'agent réfrigérant, par laquelle de l'agent réfrigérant peut être conduit à l'échangeur de chaleur d'air d'échappement (60), est branchée entre le condenseur de chauffage intérieur (2) et la première soupape de détente (5a).

3. Installation de climatisation selon une des revendications 1 à 2, **caractérisée en ce qu'**une soupape de détente (5f) est montée avant l'échangeur de chaleur d'air d'échappement (60).

4. Installation de climatisation selon l'une quelconque des revendications précédentes, **caractérisée en ce qu'**une conduite de retour pour l'agent réfrigérant venant de l'échangeur de chaleur d'air d'échappement (60) débouche dans le circuit d'agent réfrigérant entre l'échangeur de chaleur intérieur (3) et la soupape de détente (5b) pouvant être traversée de part et d'autre.

5. Installation de climatisation selon la revendication 4, **caractérisée en ce qu'**un clapet anti-retour (15g) est disposé dans la conduite de retour.

6. Véhicule automobile avec une installation de climatisation selon l'une quelconque des revendications précédentes, **caractérisé en ce que** l'échangeur de chaleur d'air d'échappement (60) est disposé dans une paroi de séparation entre l'espace intérieur et un espace de chargement du véhicule automobile.

7. Procédé pour climatiser un véhicule, **caractérisé en ce que** l'installation de climatisation selon l'une quelconque des revendications 1 à 5 fonctionne dans un mode de fonctionnement en pompe à chaleur ou dans un mode de fonctionnement en installation de refroidissement, dans lequel aussi bien dans le mode de fonctionnement en pompe à chaleur que dans le mode de fonctionnement en installation de refroidissement l'agent réfrigérant peut être transporté du côté de l'agent réfrigérant en aval du condenseur de chauffage intérieur (2) à travers l'échangeur de chaleur d'air d'échappement (60) ou est transporté à travers celui-ci.
